# EUROPÄISCHE PATENTSCHRIFT

(11) **EP 0 391 133 B1**
(45) Veröffentlichungstag und Bekanntmachung des Hinweises auf die Patenterteilung: **19.01.1994**
(21) Anmeldenummer: 90105294.4
(22) Anmeldetag: 21.03.1990
(51) Int. Cl.: C07F 7/16

(54) **Verfahren zur Herstellung von Alkylhalogensilanen**
Method for the preparation of alkylhalosilanes
Procédé de préparation d'alcoylhalosilanes

(30) Priorität: 03.04.1989 DE 3910665
(43) Veröffentlichungstag der Anmeldung: 10.10.1990
(73) Patentinhaber: BAYER AG, 51368 Leverkusen (DE)
(72) Erfinder: Degen, Bruno, Dr., D-5203 Much (DE); Feldner, Kurt, Dr., D-5090 Leverkusen 1 (DE); Kaiser, Hans-Joachim, Dr., D-5060 Bergisch Gladbach 1 (DE); Schulze, Manfred, Dr., D-5653 Leichlingen 1 (DE)

(56) Entgegenhaltungen:
- EP-A- 0 223 447
- EP-A- 0 272 860
- EP-A- 0 273 635

## Beschreibung

Die vorliegende Erfindung betrifft ein Verfahren zur Herstellung von Alkylhalogensilanen durch Umsetzung von Silicium mit einem Alkylhalogenid in Gegenwart eines Kupferkatalysators und Promotorsubstanzen. Insbesondere bezieht sich die vorliegende Erfindung auf ein Verfahren zur Herstellung von Methylchlorsilanen, bei dem gasförmige Phosphorverbindungen als Promotorsubstanzen dem Methylchloridstrom zugemischt werden.

Das grundlegende Verfahren zum Herstellen von Methylchlorsilanen ist die direkte Umsetzung von gemahlenem Silicium mit Methylchlorid in Gegenwart von Kupfer als Katalysator. Die Umsetzung ist dem Fachmann als "Rochow-Synthese" bekannt und in der US-PS 2 380 995 beschrieben.

Nach diesem Verfahren erhält man eine Mischung von Methylchlorsilanen, bei der Dimethyldichlorsilan den Hauptanteil stellt. Darüber hinaus bilden sich neben Methyltrichlorsilan weitere Methylchlorsilane wie z.B. Trimethylchlorsilan, Tetramethylsilan, Methylhydrogendichlorsilan und höhersiedende Methylchlordisilane.

Seit der Entdeckung der Synthese hat es eine Vielzahl von Aktivitäten gegeben, die sich damit beschäftigten, das Verfahren zur Durchführung der Synthese zu verbessern und den Anteil an Dimethyldichlorsilan zu erhöhen, d.h. die Synthese möglichst selektiv im Hinblick auf die Bildung von Dimethyldichlorsilan zu führen.

Letzteres erreicht man vor allem durch das Beachten von Reinheitskriterien bezüglich der Rohstoffe und durch den gezielten Einsatz von Promotoren. Auf den Einsatz von Promotoren konzentrierten sich gerade in jüngster Zeit einige Arbeiten, von denen hier exemplarisch folgende genannt seien:
DE-A 3 425 424, EP-A 138 678, EP-A 1 38 679, DE-A 3 501 085, EP-A 191 502, EP-A 194 214, EP-A 195 728 und EP-A 223 447.

Aufgabe der vorliegenden Erfindung ist ebenfalls, den Prozeß möglichst selektiv in Bezug auf Dimethyldichlorsilan zu führen. Als Maß hierfür wird in der Literatur meist das Verhältnis von Methyltrichlorsilan zu Dimethyldichlorsilan (T/D) angegeben. Ziel der vorliegenden Erfindung ist es aber darüber hinaus auch gewesen, den Gehalt an Trimethylmonochlorsilan und insbesondere den Gehalt an hochsiedenden Methylchlordisilanen (70°C < Kp. < 165°C) zu reduzieren.

Gegenstand der vorliegenden Erfindung ist nun ein Verfahren zur Herstellung von Alkylhalogensilanen durch Umsetzung von Silicium mit einem Alkylhalogenid in Gegenwart von Katalysatoren und Promotorsubstanzen, welches dadurch gekennzeichnet ist, daß man die Umsetzung in Gegenwart von gasförmigen bzw. leicht flüchtigen Phosphorverbindungen durchführt.

Der Einsatz von Phosphor als Dotierungselement von Silicium/Kupferlegierungen wird bereits in der DP 1 165 026 beschrieben. Allerdings wurde der Phosphor bei über 1000°C einer Si/Cu-Legierung zugesetzt, was äußerst energieaufwendig ist. Darüber hinaus wird Ferrosilicium als Siliciumquelle eingestzt, ein Verfahren, welches heute längst nicht mehr dem Stand der Technik entspricht. Festzuhalten ist allerdings, daß Phosphor als Dotierungselement dem Festkörper Ferrosilicium bzw. der Kupfersilicidphase vor der Umsetzung mit Methylchlorid zugesetzt werden muß.

Einen ähnlichen Prozeß beschreibt die russische Patentanmeldung Nr. 754 859, auch hier wird Phosphor zusammen mit Kupfer und Silicium einem Sinterprozeß unterzogen.

EP-A 223 447 beansprucht ein Verfahren zur Herstellung von Alkylhalogensilanen aus metallurgischem Silicium und Alkylhalogeniden in Gegenwart von Zinn oder Zinnverbindungen, Kupfer oder Kupferverbindungen in Kombination mit einem Promotor, der elementarer Phosphor, ein Metallphosphid oder eine Verbindung sein muß, die unter Bedingungen der direkten Synthese ein Metallphosphid bilden kann.

Unter Verbindungen, die unter Synthesebedingungen, d.h. bei 250-350°C in Gegenwart von Silicium, Kupfer, Zinn und z.B. Methylchlorid Metallphosphide bilden, versteht man - so wird im Text der EP-A 223 447 auf S. 13 ausgeführt -Legierungen, die Phosphide enthalten, welche ihrerseits bei der Legierungsbildung aus den die Legierung bildenden Metallen entstehen; Kupfer/Phosphor-Legierungen mit 15 bzw. 7 % P werden genannt.

In allen beschriebenen Fällen wird Phosphor in als Feststoff gebundener Form bzw. als Element eingesetzt.

In der gleichen Weise sind die EP-A 272 860 und EP-A 273 635 zu verstehen: In beiden Fällen wird Phosphor als Spurenelement - enthalten im Silicium - zum Einsatz gebracht. In beiden Fällen handelt es sich um spezielle metallurgische Dotierungsmethoden bei der Siliciumherstellung.

Um so überraschender war es, daß gasförmige oder leicht flüchtige Phosphorverbindungen wie z.B. Phosphortrichlorid, Phosphorwasserstoff, Trimethylphosphit oder gar Dimethylphosphit positiven Einfluß auf den Verlauf der direkten Alkylhalogensilansynthese nehmen. Bislang ist nirgendwo in der Fachliteratur eine derartige Reaktion beschrieben worden.

Darüber hinaus ist es ein besonderer Vorteil, gegenüber allen vorher beschriebenen Verfahren, die entweder einen speziellen metallurgischen Vorbehandlungsschritt, oder eine innige Feststoffvermischung verlangen, um die kleinen Mengen Phosphor, die als Festkörper gebunden sind, mit der katalytisch aktivierten Oberfläche in Kontakt zu bringen, wenn man in einfacher Weise zu handhabende flüchtige Phosphorverbindungen dem gasförmigen Methylchloridstrom zumischen kann.

Die hier beanspruchten flüchtigen Phosphorverbindungen enthalten auch nicht die Veranlagung, im Festkörper vorgebildete Metallphosphide unter Reaktionsbedindungen der Direktsynthese von Alkylhalogensilanen freizusetzen, wie dies in der EP-A 223 447 auf S. 13 beschrieben ist. Die vorliegende Erfindung beschreibt also eine vollkommen, von allen bislang bekanntgewordenen Verfahren, verschiedene Reaktion, bei der Phosphor als Promotor bei der Direktsynthese von Methylchlorsilanen aktiv ist.

Bei der bevorzugten Durchführungsform der vorliegenden Erfindung beobachtet man, im Falle der Methylchlorsilansynthese, nicht nur eine erhöhte Selektivität bezüglich des Verhältnisses von Methyltrichlorsilan zu Dimethyldichlorsilan sondern auch eine Reduzierung des Anfalles von Trimethylmonochlorsilan um etwa 50 % sowie eine verminderte Bildung von höhersiedenden Methylchlordisilanen des Siedebereiches 70°C < Kp. < 165°C.

Bei der bevorzugten Durchführungsform der vorliegenden Erfindung setzt man die gewünschte Menge der Phosphorverbindung dem kontinuierlich über die Kontaktmesse geleiteten Alkylhalogenid entweder in kurzen Intervallen diskontinuierlich oder kontinuierlich zu. Die eingesetzte Menge orientiert sich im diskontinuierlich betriebenen Versuch (z.B. im Labor) an der eingesetzten Menge an Kontaktmasse, im kontinuierlich geführten Prozeß zweckmäßigerweise an der Menge an frischer Kontaktmasse, die meist ebenfalls kontinuierlich in den Reaktor nachgefüllt wird. Über die Gasphase ist eine optimale Verteilung der ebenfalls gasförmigen Phosphorverbindungen gewährleistet. Die Menge beträgt zwischen 20 und 2000 ppm bezogen auf die frische Kontaktmasse wie oben beschrieben; bevorzugtermaßen setzt man zwischen 50 und 500 ppm ein. Dabei bezieht man sich andererseits auf den Phosphorgehalt der jeweiligen zum Einsatz kommenden Phosphorverbindung.

Selbstverständlich schließt der Einsatz von flüchtigen Phosphorverbindungen nicht die Anwendung anderer Promotorsubstanzen, wie z.B. Zink oder Zinkverbindungen, ebensowenig Aluminium oder Aluminiumverbindungen, wie auch nicht Zinn und Zinnverbindungen aus.

Die bevorzugt eingesetzte flüchtige Phosphorverbindung ist Phosphortrichlorid. Die Anwendung der vorliegenden Erfindung ist auch nicht beschränkt auf eine bestimmte Verfahrenstechnik bei der Direktsynthese, so kann die Reaktion diskontinuierlich oder kontinuierlich geführt werden, es kann sowohl im Fließbett, im Rührbett als auch im Festbett gearbeitet werden.

Die nachfolgenden Beispiele sollen die vorliegende Erfindung näher illustrieren, sind aber keinesfalls einschränkend zu verstehen (%-Angaben bedeuten Gew.-%).

### Beispiel 1

In einem Rührbettreaktor aus Glas, innerer Durchmesser = 30 mm, der mit einem Spiralrührer ausgestattet ist, wurden alle folgenden Experimente durchgeführt. Dabei wurde immer die gleiche Menge Silicium der gleichen Kornverteilung von 71 bis 160 µm eingesetzt.

Methylchlorid wurde unter einem Druck von 2 bar von unten über eine Glasfritte durch die Kontaktmasse geleitet. Die Methylchloridmenge wurde konstant gehalten und betrug in allen Fällen ca. 1,8 l/h bei 2 bar. Nach dem Aufheizen und Anspringen der Reaktion wurde eine stationäre Versuchsphase bei 300°C eingestellt und unter so festgelegten Bedingungen die Menge pro Zeiteinheit an gebildeter Rohsilanmischung bestimmt. Die angegebenen Werte sind immer Mittelwerte aus vier Einzelbestimmungen unter konstant gehaltenen Randbedingungen von: 2 bar, 1,8 l/h Methylchlorid und 300°C.

Die Kontaktmasse bestand aus jeweils 40 g Silicium, 3,2 g Kupferkatalysator und 0,05 g ZnO und wurde vor dem Einsatz homogenisiert. In allen Fällen wurde der gleiche Katalysator verwendet.

| Versuch | Prod.-rate [g/h] | Mono [%]*⁾ | T/D | Hochsieder [%]*⁾ | |
|---|---|---|---|---|---|
| 1 | 5,1 | 2,2 | 0,050 | 6,4 | ohne fl. P-Verb. |
| 2 | 3,3 | 0,98 | 0,046 | 4,2 | 10 µl/h (MeO)₃P |
| 3 | 4,8 | 0,73 | 0,043 | 2,9 | 10 µl/h PCl₃ |
| 4 | 3,9 | 1,15 | 0,047 | 1,7 | 10 µl/h (MeO)₂P(O)H |
| 5 | 4,7 | 1,00 | 0,038 | 4,3 | 10 µl/h PH₃ |
| Mono: Trimethylmonochlorsilan T/D: Methyltrichlorsilan/Dimethyldichlorsilan | | | | | |

| | | | | | |
|---|---|---|---|---|---|
| *⁾: bezogen auf monomere Silane **⁾: bezogen auf die gesamte Rohsilanmischung | | | | | |

### Beispiel 2

Die Versuche wurden in der gleichen Apparatur unter den gleichen Bedindungen durchgeführt, die in Beispiel 1 angegeben sind.

Dem Kupferkatalysator waren 1,5 Gew.-% ZnO und 0,1 Gew.-% Sn (eingesetzt als SnO₂) als Promotoren zugemischt werden.

| Versuch | Prod.-rate [g/h] | Mono [%]*⁾ | T/D | Hochsieder [%]**⁾ | |
|---|---|---|---|---|---|
| 6 | 6,2 | 2,53 | 0,059 | 4,1 | keine fl. P-Verb. |
| 7 | 5,4 | 1,10 | 0,047 | 2,0 | 10 µl/h (MeO)₃P |
| 8 | 4,5 | 1,05 | 0,044 | 3,3 | 10 µl/h PCl₃ |
| 9 | 4,5 | 1,20 | 0,050 | 1,8 | 10 µl/h (MeO)₂P(O)H |
| 10 | 4,2 | 1,3 | 0,023 | 1,7 | 25 µl PCl₃ beim Reaktionsbeginn |
| Mono: Trimethylmonochlorsilan T/D: Methyltrichlorsilan/Dimethyldichlorsilan | | | | | |

| | | | | | |
|---|---|---|---|---|---|
| *⁾: bezogen auf monomere Silane | | | | | |
| **⁾: bezogen auf die gesamte Rohsilanmischung | | | | | |

## Patentansprüche

1. Verfahren zur Herstellung von Alkylhalogensilanen durch Umsetzung von Silicium mit einem Alkylhalogenid in Gegenwart von Katalysatoren und Promotorsubstanzen, dadurch gekennzeichnet, daß man die Umsetzung in Gegenwart von gasförmigen bzw. leicht flüchtigen Phosphorverbindungen durchführt.

2. Verfahren nach Anspruch 1, dadurch gekennzeichnet, daß man die gasförmige bzw. leicht flüchtige Phosphorverbindung dem Alkylhalogenid vor der Umsetzung mit dem Silicium zumischt.

3. Verfahren nach einem der Ansprüche 1 oder 2, dadurch gekennzeichnet, daß man als Alkylhalogenid Methylchlorid einsetzt.

## Claims

1. A process for the production of alkyl halosilanes by reaction of silicon with an alkyl halide in the presence of catalysts and promoter substances, characterized in that the reaction is carried out in the presence of gaseous or readily volatile phosphorus compounds.

2. A process as claimed in claim 1, characterized in that the gaseous or readily volatile phosphorus compound is added to the alkyl halide before the reaction with silicon.

3. A process as claimed in claim 1 or 2, characterized in that methyl chloride is used as the alkyl halide.

## Revendications

1. Procédé de préparation d'alkylhalogénosilanes par réaction du silicium avec un halogénure d'alkyle en présence de catalyseurs et d'activateurs, caractérisé en ce que l'on effectue la réaction en présence de dérivés gazeux ou volatils du phosphore.

2. Procédé selon revendication 1, caractérisé en ce que l'on mélange le dérivé gazeux ou volatil du phosphore à l'halogénure d'alkyle avant la réaction avec le silicium.

3. Procédé selon une des revendications 1 ou 2, caractérisé en ce que l'halogénure d'alkyle est le chlorure de méthyle.
